# EUROPÄISCHE PATENTSCHRIFT

(11) **EP 0 791 874 B1**
(45) Veröffentlichungstag und Bekanntmachung des Hinweises auf die Patenterteilung: **16.06.1999**
(21) Anmeldenummer: 97201131.6
(22) Anmeldetag: 14.09.1995
(51) Int. Cl.: G05B 19/418

(54) **Verfahren und Vorrichtung zum Steuern von binären Sensoren und/oder Aktuatoren**
Method and apparatus for controlling binary sensors and/or actuators
Méthode et dispositif de commande de capteurs et/ou actionneurs binaires

(30) Priorität: 15.09.1994 DE 4433013
(43) Veröffentlichungstag der Anmeldung: 27.08.1997
(62) Teilanmeldung aus: 95931135.8
(73) Patentinhaber: Bihl, Jochen, 68623 Lampertheim (DE); Wiedemann, Bernhard, 68161 Mannheim (DE)
(72) Erfinder: Bihl, Jochen, 68623 Lampertheim (DE); Wiedemann, Bernhard, 68161 Mannheim (DE)
(74) Vertreter: Mierswa, Klaus, Dipl.-Ing.

(56) Entgegenhaltungen:
- FLASCHKA: "Binäre Sensoren am Bus" ELEKTRONIK, Bd. 43, Nr. 12, 14.Juni 1994, DE, Seiten 64-68, XP000464137
- KNOCHE ET AL: "Feldbus-Anschluss für eine VMEbus-basierte SPS" ELEKTRONIK, Bd. 42, Nr. 23, 16.November 1993, DE, Seiten 56-61, XP000414806

## Beschreibung

### Technisches Gebiet:

Die Erfindung betrifft ein Verfahren zum Steuern und Aktivieren von miteinander mittels eines Bussystems vernetzten binären Sensoren und/oder Aktuatoren (ASI-Slaves), wobei die Bedienung des Bussystems von einem ASI-Master und die Verarbeitung der ASI-Daten von einem Verarbeitungsrechner durchgeführt wird und ASI-Master und Verarbeitungsrechner ASI-Daten und ASI-Flags miteinander austauschen gemäß dem Oberbegriff des Patentanspruchs 1 sowie eine Vorrichtung gemäß dem Oberbegriff des Patentanspruchs 7.

### Stand der Technik:

Bisher war es bei Feldbussystemen aus Kosten- und Platzgründen nicht möglich, binäre Sensoren oder Aktuatoren direkt busfähig zu machen. Durch hochintegrierte Technologien können heute Sensoren neben dem eigentlichen Schaltzustand noch weitere Funktionen liefern, die Einstell- und Diagnosemöglichkeiten der Sensoren oder Aktuatoren bieten; diese Funktionen mußten bisher durch zusätzliche Leitungen und damit zusätzlichem Verdrahtungsaufwand realisiert werden. Um diese Nachteile zu beheben, wurde der Aktuator-Sensor-Interface-Standard, ASI-Standard genannt, geschaffen, der ein Feldbuskonzept darstellt, mit dem binäre Aktuatoren und Sensoren mit der untersten bzw. ersten Steuerungsebene verknüpft werden, um sie kommunikationsfähig zu machen. Das Aktuator-Sensor-Interface ersetzt dabei den Kabelbaum, Verteilerschränke, Klemmleisten usw. durch ein einfaches Zweileiter-Flachbandkabel, über das ASI-Daten mit den Peripherie-Elementen ausgetauscht werden und das diese zugleich mit Energie versorgt. Mit einem sogenannten separaten ASI-Anschluß in Form eines standardisierten Moduls, der Teil der Busstruktur ist, macht ASI zunächst einmal die meisten konventionellen Peripherie-Elemente busanschlußfähig. Beim integrierten ASI-Anschluß befindet sich hingegen in einem Gerät ein sogenannter Slave-Baustein, der dadurch selbst busfähig ist (ASI-Verein in: Sonderdruck aus Feldbussysteme für die Investitionsgüterindustrie, Herausgeber VDMA, Frankfurt 1992, Stand 3.12.1992 sowie Druckschrift: Fabrikautomation VariNet-A Aktuator-Sensor-Interface Katalog Sensorsysteme 5, Ausgabe 1994, Herausgeber: Pepperl + Fuchs GmbH, 68301 Mannheim; sowie Druckschrift: ASI: Das Aktuator-Sensor-Interface für die Automation, herausgegeben von Werner Kriesel und Otto Madelung, Hanser-Verlag 1994).

Der Master, ASI-Master genannt, übernimmt alle Aufgaben, die für die Abwicklung des Busbetriebs der Slaves notwendig sind einschließlich von Aufgaben der Initialisierung und der Diagnose. Über den ASI-Master ist an den Feldbus ein übergeordneter Verarbeitungsrechner, wie speicherprogrammierbare Steuerung oder Bus-Rechner oder PC oder VME-Busrechner, angeschlossen, dem sämtliche Signale aller ASI-Slaves zugeführt werden, wobei der ASI-Master gewährleistet, dass die Signale dem Verarbeitungsrechner in einem festen Zeitrahmen zur Verfügung gestellt werden und umgekehrt die Steuerungsbefehle des Verarbeitungsrechners den ASI-Slaves aufgegeben werden. Der ASI-Master stellt außerdem sicher, dass hinzugekommene Slaves erkannt und ausgefallene Slaves an den Verarbeitungsrechner gemeldet werden; der ASI-Master paßt somit die ASI-Funktionen der Slaves an das externe Verarbeitungssystem des Verarbeitungsrechners an. Der ASI-Master besitzt für die Bearbeitung dieser Aufgaben normalerweise einen Controller, der ein enges Zeitraster einhalten muß. Die Bitzeit bei ASI beträgt 6 µsec (Mikrosekunden), wobei der Controller zyklisch alle 150 µsec ein komplettes ASI-Telegramm auswerten muß. Zu jedem Zeitpunkt kann eine Situation auftreten, bei der ASI-Master den ASI-Kreis in einen sicheren Zustand versetzen muß.

### Technische Aufgabe:

Der Erfindung liegt die Aufgabe zugrunde, ein Verfahren und eine Vorrichtung der eingangs genannten Gattung anzugeben, mit denen allgemein die ASI-Daten und die ASI-Flags zwischen dem Verarbeitungsrechner und dem ASI-Master ohne Dateninkonsistenz übertragen werden können.

### Offenbarung der Erfindung und deren Vorteile:

Die Lösung der Aufgabe besteht beim erfindungsgemäßen Verfahren darin, dass zur Sicherstellung der Konsistenz zwischen ASI-Daten und ASI-Flags der ASI-Master die ASI-Daten und die ASI-Flags vor der Übertragung zum Verarbeitungsrechner einfriert, also nicht mehr verändert, und der ASI-Master die dadurch zueinander konsistenten ASI-Daten und die ASI-Flags zum gleichen Zeitpunkt oder zu verschiedenen Zeiten zusammen in einer Funktion oder in verschiedenen Funktionen an den Verarbeitungsrechner überträgt. In vorteilhafter Weise überträgt der ASI-Master zuerst die ASI-Daten und anschließend die ASI-Flags und stellt dabei sicher, dass die ASI-Flags während der Abarbeitung der Übertragungsfunktion nicht auf "ok" sondern nur auf "false" gesetzt werden können.

Der ASI-Master speichert die ASI-Daten und die ASI-Flags zum gleichen Zeitpunkt oder zu verschiedenen Zeiten intern zwischen und ändert während der Übertragung der ASI-Daten und der ASI-Flags zum Verarbeitungsrechner dieselben nicht mehr.

Vorteilhaft prüft der ASI-Master die ASI-Flags in einer Funktion und setzt bei fehlerfreiem Zustand auf "ok", wobei diese Funktion nicht asynchron zur Übertragung der ASI-Daten und ASI-Flags zum Verarbeitungsrechner bearbeitet wird.

Bei einer Fehlererkennung durch den ASI-Master kann ein zusätzliches Fehlerbit gesetzt werden, welches nur vom ASI-Master gesetzt werden und nur vom Verarbeitungsrechner gelöscht bzw. quittiert werden kann, und Fehler gespeichert werden, wobei durch das Speichern von Fehlern durch die Verarbeitungsrechnersoftware eine Konsistenz der ASI-Daten beim Datenaustausch zwischen dem Verarbeitungsrechnern und dem ASI-Master erreicht wird.

Eine Vorrichtung der genannten Gattung ist dadurch gekennzeichnet, daß zur Sicherstellung der Konsistenz zwischen den ASI-Daten und den ASI-Flags die Vorrichtung die ASI-Daten und die ASI-Flags vor der Übertragung zum Verarbeitungsrechner einzufrieren imstande ist, also nicht mehr verändert, und und der ASI-Master die dadurch zueinander konsistenten ASI-Daten und die ASI-Flags zum gleichen Zeitpunkt oder zu verschiedenen Zeiten zusammen in einer Funktion oder in verschiedenen Funktionen an den Verarbeitungsrechner überträgt.

Erkennt der ASI-Master zu einem beliebigen Zeitpunkt einen Fehler, dann können die entsprechenden ASI-Flags spezifikationskonform beschrieben werden. Zusätzlich zu den ASI-Flags kann somit beispielsweise ein globales ASI-Fehlerbit gesetzt werden, welches nur vom ASI-Master gesetzt und nur von der Verarbeitungsrechnersoftware gelöscht werden darf. Ein vom ASI-Master erkannter Fehler wird für den Verarbeitungsrechner gespeichert. Durch das Speichern von Fehlern wird eine Konsistenz der ASI-Daten beim Datenaustausch zwischen dem Verarbeitungsrechner und dem ASI-Master erreicht.

Der Verarbeitungsrechner kann auf kurzzeitige ASI-Fehler in einer in der Verarbeitungsrechnersoftware vorgegebenen Art und Weise reagieren.

Vor dem Datenaustausch zwischen der ASI-Mastersoftware und der Verarbeitungsrechnersoftware wird überprüft, ob ein Fehler vorliegt. Bei Nichtvorliegen eines Fehlers werden die ASI-Daten der beiden Softwareteile, nämlich ASI-Mastersoftware und Verarbeitungsrechnersoftware, ausgetauscht und als neue gültige ASI-Daten akzeptiert, hingegen gehen bei Vorliegen eines Fehlers beide Prozesse in die jeweilige Fehlerbehandlung über und verwerfen die ausgetauschten ASI-Daten als fehlerhaft. Nach beendetem Datenaustausch wird erneut eine Fehlerprüfung durchgeführt, ob nun aktuell ein Fehler vorliegt oder ob in der Vergangenheit, angezeigt durch das ASI-Fehlerbit, zwischenzeitlich ein Fehler aufgetreten ist. Im Fehlerfall gehen die Prozesse in die Fehlerbehandlung über und verwerfen die ausgetauschten ASI-Daten, ohne Fehler werden die übertragenen ASI-Daten als gültig akzeptiert und der Datenaustausch ist beendet, wobei bis zum nächsten Datenaustausch beide Prozesse autark arbeiten.

Dazu hat im ASI-Steuermaster der implementierte ASI-Master gegenüber dem implementierten Verarbeitungsrechner immer und zu jedem Zeitpunkt die höhere Priorität. Der zeitliche Ablauf des ASI-Masters darf zu keinem Zeitpunkt und unter keinen Umständen durch den implementierten Verarbeitungsrechner verändert, gebremst oder unterbrochen werden. Demgegenüber kann der ASI-Master bzw. die ASI-Mastersoftware den implementierten Verarbeitungsrechner zu jedem Zeitpunkt unterbrechen; der ASI-Master bzw. die ASI-Mastersoftware ist somit imstande, die Zykluszeit der Verarbeitungsrechnersoftware zu ändern, die veränderlich sein kann. Reaktionen des internen ASI-Masters auf Fehler werden in einem Zeitraster, vorzugsweise festes Zeitraster, durchgeführt.

Bei vielen Verarbeitungsrechnern ist eine variable Zykluszeit problematisch, da beispielsweise in Maschinen und Anlagen die Reaktionszeit vor allem auf Fehlerzustände kalkulierbar und im Vorhinein bekannt sein muß. Die Zykluszeit der Verarbeitungsrechnersoftware in einem ASI-Steuermaster ist im Normalfall konstant und wird nur in Fehlerzuständen stark verändert. In Fehlerzuständen sorgt jedoch der ASI-Master dafür, dass eine Maschine oder Anlage in klar spezifizierter Art und Weise in einen sicheren Betriebszustand versetzt wird. Bei Fehlerzuständen versetzt der ASI-Master den ASI-Kreis in einen sicheren Zustand und solange kein Fehlerzustand vorliegt ist die Zykluszeit des Verarbeitungsrechners annähernd konstant.

Die ASI-Spezifikation, in der die Anforderungen an einen ASI-Master nach heutigem Stand der Technik beschrieben sind, schreibt Ablauf und Reaktionszeiten für verschiedene Zustände im ASI-System streng vor. Dabei ist der Rechenzeitbedarf für die verschiedenen Zustände sehr unterschiedlich, nur sehr wenige ASI-Systemzustände sind im ASI-Master aufwendig zu bearbeiten. Sehr zeitaufwendig ist beispielsweise die Abarbeitung von Fehlerzuständen im ASI-System oder die automatische Aufnahme von zusätzlich angeschlossenen ASI-Slaves in den korrekten Betrieb. Die aufwendig zu bearbeitenden ASI-Systemzustände können nach heutigem Stand der Technik nicht vereinfacht werden, ohne wesentliche Einschränkungen in der Betriebssicherheit und im Komfort des ASI-Systems in Kauf zu nehmen.

Die aufwendig zu bearbeitenden ASI-Systemzustände kommen im realen Betrieb eines ASI-Systems nur sehr selten vor. Sie sind jedoch ausschlaggebend für den minimalen Leistungsbedarf in einem ASI-Master.

Um die ASI-Spezifikation einhalten zu können, werden heute leistungsstarke Controller verwendet, die in heutigen Applikationen nicht ausgelastet und die so ausgelegt sind, dass die aufwendigen ASI-Systemzustände in der spezifizierten Zeit vom Master abgearbeitet werden können. Entscheident für die notwendige Leistungsfähigkeit der Controller in einem ASI-Master sind "worst case" ASI-Systemzustände.

Der Datenaustausch zwischen ASI-Master und Verarbeitungsrechner geschieht in einer Art und Weise, dass Datenkonsistenz sichergestellt ist, wozu beim Austausch zwischen ASI-Master und Verarbeitungsrechner zur Sicherstellung der Konsistenz zwischen ASI-Daten und ASI-Flags der ASI-Master die ASI-Daten und die ASI-Flags vor der Übertragung zum Verarbeitungsrechner einfriert, also nicht mehr verändert, zum Beispiel zwischenspeichert, und diese so zueinander konsistenten ASI-Daten und ASI-Flags an den Verarbeitungsrechner überträgt. Dazu kann bei einer Fehlererkennung durch den ASI-Master ein zusätzliches Fehlerbit gesetzt werden, das nur vom ASI-Master gesetzt werden und nur vom Verarbeitungsrechner gelöscht bzw. quittiert werden darf, und Fehler gespeichert werden, wobei durch das Speichern von Fehlern durch die Verarbeitungsrechnersoftware eine Konsistenz der ASI-Daten beim Datenaustausch zwischen dem Verarbeitungsrechner und dem ASI-Master erreicht wird.

Das Verfahren der Sicherstellung der Datenkonsistenz gilt ganz allgemein. Denn beim Einsatz des Bussystems nach heutigem Stand der Technik und nach heutigem Stand der ASI-Spezifikationen können Dateninkonsistenzen zwischen den Eingangsdaten und den ASI-Flags auftreten. Nach heutigem Stand der Technik wird im ASI-Master eine Funktion verwendet, um die Eingangsdaten vom ASI-Master einzulesen und an einen Verarbeitungsrechner zu übertragen.

Deshalb kann zur Steuerung und Aktivierung von miteinander mittels eines Bussystems vernetzten binären Sensoren und/oder Aktuatoren (ASI-Slaves), wobei die Bedienung des Bussystems von einem ASI-Master und die Verarbeitung der ASI-Daten von einem Verarbeitungsrechner durchgeführt wird und der ASI-Master und der Verarbeitungsrechner ASI-Daten und ASI-Flags miteinander austauschen und beim Austausch die Konsistenz zwischen ASI-Daten und ASI-Flags sichergestellt wird, erfindungsgemäß so verfahren werden, dass der ASI-Master die ASI-Daten und die ASI-Flags vor der Übertragung zum Verarbeitungsrechner einfriert, also nicht mehr verändert, oder zum Beispiel zwischenspeichert, und diese zueinander konsistenten ASI-Daten und ASI-Flags an den Verarbeitungsrechner überträgt.

Vorzugsweise überträgt der ASI-Master zuerst ASI-Daten und anschließend die ASI-Flags, wobei der ASI-Master dabei sicherstellen kann, dass die ASI-Flags während der Abarbeitung der Übertragungsfunktion nicht auf "ok" sondern nur auf "false" gesetzt werden können. Damit wird gewährleistet, dass der Verarbeitungsrechner keine Fehler überliest.

Der ASI-Master speichert die ASI-Daten und die ASI-Flags zum gleichen Zeitpunkt bzw. unmittelbar hintereinander intern zwischen, wobei während der Übertragung zum Verarbeitungsrechner keine Veränderungen der ASI-Daten und die ASI-Flags nicht mehr stattfinden. Der ASI-Master kann die ASI-Daten und die ASI-Flags zusammen in einer Funktion oder in verschiedenen Funktionen an den Verarbeitungsrechner übertragen. Der ASI-Master kann die ASI-Flags in einer Funktion prüfen und bei fehlerfreiem Zustand auf "ok" setzen, wobei diese Funktion nicht asynchron zur Übertragung der ASI-Daten und ASI-Flags zum Verarbeitungsrechner bearbeitet werden darf bzw. bearbeitet wird.

Bei einer Fehlererkennung durch den ASI-Master kann allgemein ein zusätzliches Fehlerbit gesetzt werden, das nur vom ASI-Master gesetzt und nur vom Verarbeitungsrechner gelöscht bzw. quittiert werden darf, und Fehler gespeichert werden, wobei durch das Speichern von Fehlern durch die Verarbeitungsrechnersoftware eine Konsistenz der ASI-Daten beim Datenaustausch zwischen dem oder den Verarbeitungsrechnern und dem ASI-Master erreicht wird.

Nach heutigem Stand der Technik verwendet man im ASI-Master eine Funktion, um die Eingangsdaten vom ASI-Master einzulesen und an einen Verarbeitungsrechner zu übertragen sowie eine zweite Funktion, um die ASI-Flags an einen Verarbeitungsrechner zu übertragen wie folgt:

| Status = Eingangsdatenabbild_lesen() [Funktion] | | |
|---|---|---|
| Argument | Argumentwert | Beschreibung |
| --- | --- | --- |
| Resultat | Resultatwert | Beschreibung |
| Abbild | ASI-Daten | Enthält die Zustände an den Eingängen der aktiven Slaves und Default-Daten bei inaktiven Slaves |
| Status | Zeigt das Ergebnis der Funktion an | |
| | OK | Die ASI-Daten konnten gelesen werden |
| | NOK | Die ASI-Daten konnten nicht gelesen werden |

Im Eingansdatenabbild stehen Default-Daten bei inaktiven Slaves. Die Default-Daten können im Verarbeitungsrechner nicht mehr von realen Eingangs zuständen unterschieden werden.

Eine zweite Funktion im ASI-Master liest die ASI-Flags im ASI-Master ein und überträgt die ASI-Flags zum Verarbeitungsrechner:

| Status = ASI-Flags_lesen() [Funktion] | | |
|---|---|---|
| Argument | Argumentwert | Beschreibung |
| --- | --- | --- |
| Resultat | Resultatwert | Beschreibung |
| Status | Zeigt das Ergebnis der Funktion an | |
| | OK | Die ASI-Daten konnten gelesen werden |
| | NOK | Die ASI-Daten konnten nicht gelesen werden |
| ASI-Flags | | Enthält die ASI-Flags der Ablaufkontrollebene |

Die ASI-Flags enthalten die Information über den Betriebszustand des Bussystems. Fehlerzustände wie Spannungseinbruch oder das Fehlen von ASI-Slaves wird über die ASI-Flags vom Master zum Verarbeitungsrechner gemeldet. Damit besteht ein zeitlicher Versatz zwischen dem Zugriff auf die Eingangsdaten und dem Zugriff auf die ASI-Flags. Innerhalb dieses zeitlichen Versatzes kann sich der Betriebszustand des Systems ändern.

Die ASI-Daten und die ASI-Flags werden im ASI-Master gleichzeitig oder unmittelbar hintereinander ohne Unterbrechnung durch eine andere Funktion aktualisiert.

### Beispiel:

Der Verarbeitungsrechner liest zuerst die ASI-Flags und anschließend die Eingangsdaten ein usw..
Zeitlicher Ablauf: (t: Zeit, t₁, t₂, t₃, t₄... )
- t₁:: Das ASI-System arbeitet fehlerfrei.
- t₂:: Der Verarbeitungsrechner liest die ASI-Flags und bekommt die Information, dass das ASI System korrekt arbeitet.
- t₃:: Das ASI-System hat einen Fehler, beispielsweise fällt ein ASI-Slave aus.
- t₄:: Der ASI-Master erkennt den Fehler, aktualisiert die ASI-Flags und überschreibt beispielsweise die Eingangsdaten eines ausgefallenen ASI-Slaves mit Default-Daten.
- t₅:: Der Verarbeitungsrechner liest die Eingangsdaten. Der Verarbeitungsrechner empfängt beispielsweise für einen ausgefallenen ASI-Slave Default-Daten.
- t₇:: Das ASI-System arbeitet fehlerfrei.
- t₈:: Der Verarbeitungsrechner liest die ASI-Flags und bekommt die Information, dass das ASI-System korrekt arbeitet.

Der Verarbeitungsrechner würde in diesem Beispiel mit fehlerhaften Prozeß- oder Default-Daten arbeiten, ohne den Fehler im ASI-System zu erkennen.

Kurzbeschreibung der Zeichnung, in der zeigen:
- Figur 1: die Implementierung eines ASI-Masters und eines Verarbeitungsrechners in einem ASI-Steuermaster
- Figur 2: die prinzipielle Arbeitsweise des ASI-Steuermasters mittels des implementierten ASI-Masters und des implementierten Verarbeitungsrechners
- Figur 3: den zeitlichen Ablauf der Verarbeitungsrechnersoftware
- Figur 4: die Aufteilung der Rechenzeit auf die beiden asynchronen Prozesse des ASI-Masters und des Verarbeitungsrechners bei der Realisierung des ASI-Steuermasters mit einem einzigen Controller und
- Figur 5: ein Beispieldiagramm für den Datenaustausch.

### Bevorzugte Ausführungsform der Erfindung:

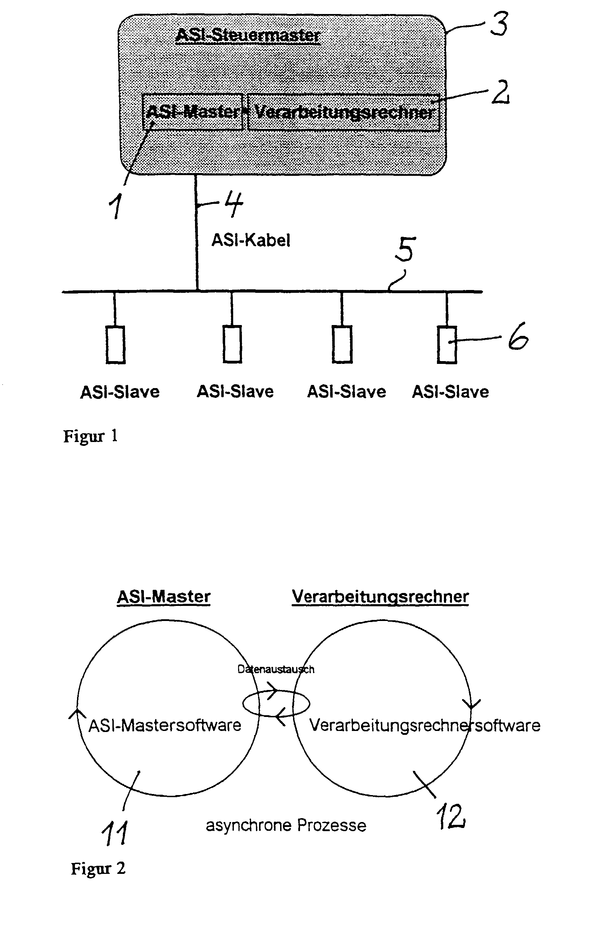

Figur 1 zeigt die Implementierung eines ASI-Masters 1 und eines Verarbeitungsrechners 2 innerhalb eines Gerätes 3, der sogenannte ASI-Steuermaster 3, der über eine Leitung 4 mit dem ASI-Kabel 5 verbunden ist, an dem eine Mehrzahl von ASI-Slaves 6 angebunden sind.

In Figur 2 ist die prinzipielle Arbeitsweise des ASI-Steuermasters mittels des implementierten ASI-Masters und des implementierten Verarbeitungsrechners dargestellt. Der ASI-Master bearbeitet seine ASI-Mastersoftware 11, der Verarbeitungsrechner bearbeitet seine Verarbeitungsrechnersoftware 12; beide asynchronen Prozesse können unabhängig voneinander sein, wie dargestellt, wobei zwischen beiden Softwareteilen ein Datenaustausch stattfindet, was durch die beide Prozesse verbindende Schleife "Datenaustausch" dargestellt ist. Dabei arbeitet die Verarbeitungsrechnersoftware fehlerfrei, auch wenn zu einem beliebigen Zeitpunkt Veränderungen im ASI-Kreis auftreten. Der zeitliche Ablauf des ASI-Masters und des Verarbeitungsrechners verläuft asynchron. Die beiden Prozesse ASI-Master und Verarbeitungsrechner können völlig autark entkoppelt arbeiten und treten dann nur zum Datenaustausch miteinander in Kontakt. Zwischen den Datenaustauschphasen können der ASI-Master und der Verarbeitungsrechner entkoppelt und autark arbeiten.

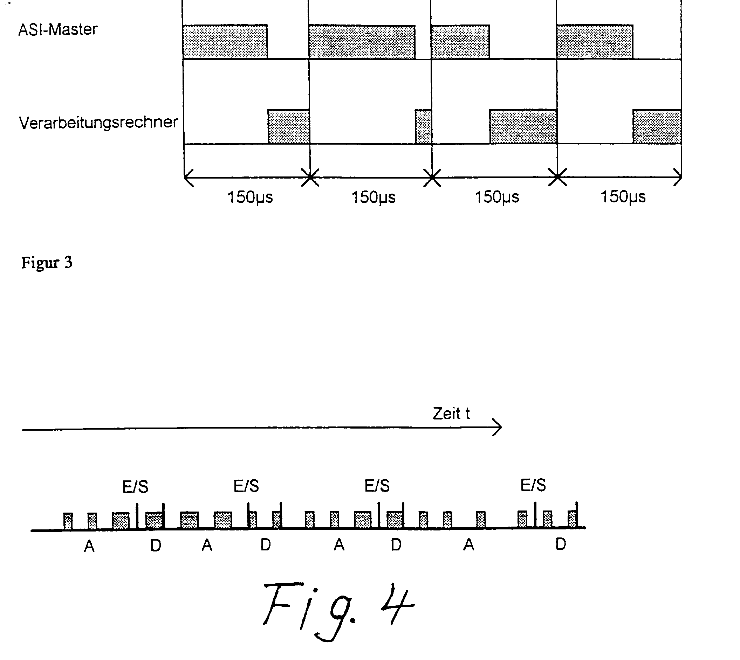

In Figur 3 ist der zyklische zeitliche Ablauf der Verarbeitungsrechnersoftware des Verarbeitungsrechner für den Fall gezeigt, dass der ASI-Steuermaster auf einem Controller realisiert ist. In der Figur 3 ist der zyklische, zeitliche Ablauf der Verarbeitungsrechnersoftware, unter Berücksichtigung der unterschiedlich großen Zeitscheiben, die dem Verarbeitungsrechner vom ASI-Master zur Verfügung gestellt werden, dargestellt. Die Zykluszeit des Verarbeitungsrechners, also die Zeit zwischen dem Beginn von zwei Datenaustauschphasen, hängt zu einem großen Teil von der zur Verfügung gestellten Rechenzeit ab.

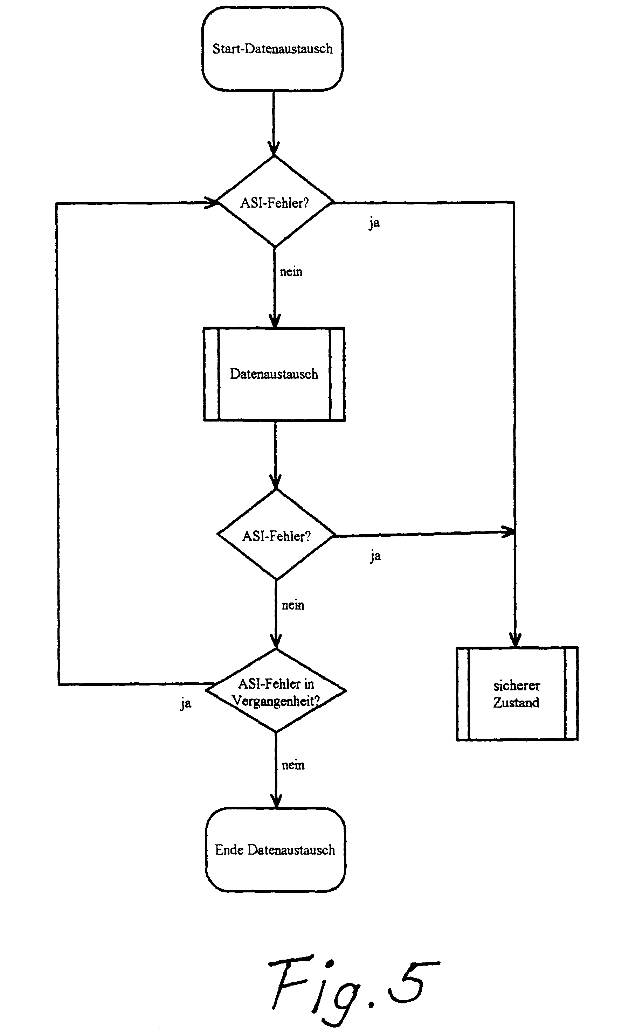

In Figur 4 ist die Aufteilung der Rechenzeit auf die beiden asynchronen Prozesse des ASI-Masters und des Verarbeitungsrechners für den Fall gezeigt, dass der ASI-Steuermaster, also ASI-Master und Verarbeitungsrechner, auf einem einzigen Controller realisiert sind. Es bedeuten:
E/S = Ende des Verarbeitungsrechnerzyklusses und Start eines neuen Verarbeitungsrechnerzyklusses
D = Datenaustausch zwischen ASI-Master und Verarbeitungsrechner
A = Abarbeitung des Verarbeitungsrechners
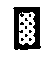 = Zeitscheiben des Verarbeitungsrechners

Dem Verarbeitungsrechner wird vom ASI-Steuermaster immer nur solange Rechenzeit zur Verfügung gestellt, wie der ASI-Master keine Rechenzeit beansprucht, also in die Lücken der Zykluszeit des ASI-Telegramms, wobei diese Lücken zeitlich unterschiedlich groß sein können. Die unterschiedlichen Längen dieser Zeitscheiben, die dem Verarbeitungsrechner zur Verfügung gestellt werden, hängen vom ASI-Master ab,

Figur 5 zeigt ein mögliches Hauptdiagramm für den Datenaustausch beginnend mit dem Start des Datenaustauschs. Nach dem Start des Datenaustauschs wird abgefragt, ob ein ASI-Fehler aufgetreten ist; bei Bejahung wird der ASI-Kreis in den sicheren Zustand gefahren. Bei Verneinung wird der Datenaustausch durchgeführt. Danach wird wieder abgefragt, ob ein ASI-Fehler aufgetreten ist, bei Bejahung wird der ASI-Fehler in der Vergangenheit abgefragt und bei dessen Bejahung in einer Schleife zurück zur ersten Frage nach dem ersten ASI-Fehler gegangen. Bei Verneinung wird das Ende des Datenaustauschs angezeigt und vollzogen.

Der ASI-Kreis wird vorteilhaft bei Fehlprogrammierung der Verarbeitungsrechnersoftware weiterhin spezifikationskonform betrieben, so dass eine Fehlerprogrammierung den Ablauf der ASI-Mastersoftware des ASI-Masters nicht beeinflußt, wobei der ASI-Master den ASI-Kreis unabhängig vom Zustand der Verarbeitungsrechnersoftware in einen sicheren Zustand zu versetzen imstande ist. Des weiteren ist der Verarbeitungsrechner auf kurzzeitige ASI-Fehler in einer vorgegebenen Art und Weise in der Verarbeitungsrechnersoftware zu reagieren imstande. Der zyklische Aufruf der ASI-Mastersoftware kann mit Hilfe eines Watchdog überwacht werden. Wird dem ASI-Master beispielsweise über den Watchdog gemeldet, dass sich das Steuerprogramm in einer Endlosschleife befindet, dann kann der ASI-Master den ASI-Kreis in einen sicheren Zustand versetzen. Ein sicherer und gefahrloser Zustand bei ASI ist beispielsweise die Offline-Phase. In der Offline-Phase wird zuerst an allen ASI-Slaves ein RESET durchgeführt und danach wird die Kommunikation auf der ASI-Leitung eingestellt. Nach dem RESET und dem Einstellen der Kommunikation besteht keine weitere Gefahr für eine Anlage.

Tritt unabhängig vom Zustand des Verarbeitungsrechnersoftware beispielsweise ein ASI-Power-Fail, wie Leistungsausfall auf dem Bus auf, dann wird der ASI-Steuermaster sofort in die Offline-Phase versetzt und zwar unabhängig vom Zustand der Verarbeitungsrechnersoftware. Fällt ein ASI-Slave aus, dann wird der Slave vom ASI-Master aus der Liste der erkannten Slaves gestrichen und die Daten- und Parameterwerte des Slaves in der ASI-Mastersoftware werden beispielsweise mit Defaultwerten beschrieben, was unabhängig vom Zustand der Verarbeitungsrechnersoftware geschieht.

Der ASI-Master bzw. die ASI-Mastersoftware darf die Zykluszeit der Verarbeitungsrechnersoftware ändern. Lediglich der ASI-Master tauscht über eine eigene Schnittstelle nach außerhalb des ASI-Steuermasters ASI-Daten mit den ASI-Slaves aus, wobei der Verarbeitungsrechner die ASI-Daten des Verarbeitungsrechners mit dem ASI-Master austauscht, der wiederum für den gesamten Datenaustausch mit den ASI-Slaves sorgt; der Datenaustausch mit den ASI-Slaves wird vom ASI-Master bedient. Der Verarbeitungsrechner übergibt die ASI-Daten der Verarbeitungsrechnersoftware an den ASI-Master, der für das Weiterleiten der ASI-Daten und den Datenaustausch mit den ASI-Slaves sorgt.

### Gewerbliche Anwendbarkeit:

Der Gegenstand der Erfindung ist insbesondere für Verfahren zur Steuerung und Aktivierung von miteinander mittels eines Bussystems vernetzten binären Sensoren und/oder Aktuatoren, ASI-Slaves, anwendbar, die von einem Verarbeitungsrechner angesteuert werden und umgekehrt. Die Nützlichkeit der Erfindung liegt darin, dass die Konsistenz zwischen ASI-Daten und ASI-Flags gewärleistet ist und dass ASI-Master ASI-Daten und ASI-Flags konsistent mit einem Verarbeitungsrechner austauschen können.

## Patentansprüche

1. Verfahren zum Steuern und Aktivieren von miteinander mittels eines Bussystems vernetzten binären Sensoren (6) und/oder Aktuatoren (ASI-Slaves), wobei die Bedienung des Bussystems von einem ASI-Master (1) und die Verarbeitung der ASI-Daten von einem Verarbeitungsrechner (2) durchgeführt wird und ASI-Master (1) und Verarbeitungsrechner (2) ASI-Daten und ASI-Flags miteinander austauschen, dadurch gekennzeichnet,
dass zur Sicherstellung der Konsistenz zwischen ASI-Daten und ASI-Flags der ASI-Master (1) die ASI-Daten und die ASI-Flags vor der Übertragung zum Verarbeitungsrechner (2) einfriert, also nicht mehr verändert, und der ASI-Master (1) die dadurch zueinander konsistenten ASI-Daten und die ASI-Flags zum gleichen Zeitpunkt oder zu verschiedenen Zeiten zusammen in einer Funktion oder in verschiedenen Funktionen an den Verarbeitungsrechner (2) überträgt.

2. Verfahren nach Anspruch 1, dadurch gekennzeichnet,
dass der ASI-Master (1) zuerst die ASI-Daten und anschließend die ASI-Flags überträgt und dabei sicherstellt, dass die ASI-Flags während der Abarbeitung der Übertragungsfunktion nicht auf "ok" sondern nur auf "false" gesetzt werden können.

3. Verfahren nach Anspruch 1 oder 2, dadurch gekennzeichnet,
dass der ASI-Master (1) die ASI-Daten und die ASI-Flags zum gleichen Zeitpunkt oder zu verschiedenen Zeiten intern zwischenspeichert und während der Übertragung der ASI-Daten und der ASI-Flags zum Verarbeitungsrechner (2) dieselben nicht mehr ändert.

4. Verfahren nach einem der vorherigen Ansprüche,
dadurch gekennzeichnet,
dass der ASI-Master (1) die ASI-Flags in einer Funktion prüft und bei fehlerfreiem Zustand auf "ok" setzt, wobei diese Funktion nicht asynchron zur Übertragung der ASI-Daten und ASI-Flags zum Verarbeitungsrechner (2) bearbeitet wird.

5. Verfahren nach einem der vorherigen Ansprüche,
dadurch gekennzeichnet,
dass bei einer Fehlererkennung durch den ASI-Master (1) ein zusätzliches Fehlerbit gesetzt wird, welches nur vom ASI-Master (1) gesetzt werden und nur vom Verarbeitungsrechner (2) gelöscht bzw. quittiert werden kann, und Fehler gespeichert werden, wobei durch das Speichern von Fehlern durch die Verarbeitungsrechnersoftware (12) eine Konsistenz der ASI-Daten beim Datenaustausch zwischen dem Verarbeitungsrechnern (2) und dem ASI-Master (1) erreicht wird.

6. Vorrichtung zum Steuern und Aktivieren von miteinander mittels eines Bussystems vernetzten binären Sensoren (6) und/oder Aktuatoren (ASI-Slaves), wobei die Bedienung des Bussystems von einem ASI-Master (1) und die Verarbeitung der ASI-Daten von einem Verarbeitungsrechner (2) durchgeführt wird und ASI-Master (1) und Verarbeitungsrechner (2) ASI-Daten und ASI-Flags miteinander austauschen, dadurch gekennzeichnet,
dass zur Sicherstellung der Konsistenz zwischen den ASI-Daten und den ASI-Flags die Vorrichtung die ASI-Daten und die ASI-Flags vor der Übertragung zum Verarbeitungsrechner (2) einzufrieren imstande ist, also nicht mehr verändert, und und der ASI-Master (1) die dadurch zueinander konsistenten ASI-Daten und die ASI-Flags zum gleichen Zeitpunkt oder zu verschiedenen Zeiten zusammen in einer Funktion oder in verschiedenen Funktionen an den Verarbeitungsrechner (2) überträgt.

## Claims

1. Process for controlling and activating binary sensors (6) and/or actuators (ASI slaves) that are linked to each other by a bus system, whereby the operation of the bus system is effectuated by an ASI master (1) and the processing of the ASI data is carried out by a processing computer (2), and the ASI master (1) and the processing computer (2) exchange ASI data and ASI flags with each other, characterized in that,
in order to ensure the consistency between the ASI data and the ASI flags, the ASI master freezes the ASI data and the ASI flags before transmitting them to the processing computer (2), that is to say, no longer changes them, and the ASI master (1) transmits the ASI data and the ASI flags, which are consequently consistent with each other, to the processing computer (2) at the same point in time or at different times together in one function or in different functions.

2. Process according to Claim 1, characterized in that
the ASI master (1) first transmits the ASI data and subsequently the ASI flags while ensuring that the ASI flags cannot be set to "OK" but rather only to "false" while the transmission function is being processed.

3. Process according to Claim 1 or 2, characterized in that
the ASI master (1) temporarily stores the ASI data and the ASI flags internally at the same point in time or at different times and no longer changes the ASI data and the ASI flags during their transmission to the processing computer (2).

4. Process according to one of the preceding claims, characterized in that
the ASI master (1) checks the ASI flags in a function and, if they are in error-free state, sets them to "OK", whereby this function is not processed asynchronously to the transmission of the ASI data and of the ASI flags to the processing computer (2).

5. Process according to one of the preceding claims, characterized in that,
when an error is recognized by the ASI master (1), an additional error bit is placed, which can only be placed by the ASI master (1) and which can only be deleted or acknowledged by the processing computer (2), and errors are stored, whereby the storage of errors by the processing computer software (12) results in a consistency of the ASI data during the data exchange between the processing computer (2) and the ASI master (1).

6. Device for controlling and activating binary sensors (6) and/or actuators (ASI slaves) that are linked to each other by a bus system, whereby the operation of the bus system is effectuated by an ASI master (1) and the processing of the ASI data is carried out by a processing computer (2), and the ASI master (1) and the processing computer (2) exchange ASI data and ASI flags with each other, characterized in that,
in order to ensure the consistency between the ASI data and the ASI flags, the device is capable of freezing the ASI data and the ASI flags before transmitting them to the processing computer (2), that is to say, no longer changes them, and the ASI master (1) transmits the ASI data and the ASI flags, which are consequently consistent with each other, to the processing computer (2) at the same point in time or at different times together in one function or in different functions.

## Revendications

1. Méthode de commande et d'activation de capteurs (6) et/ou d'actionneurs binaires (organes asservis IAC) reliés entre eux au moyen d'un système de bus, la commande du système de bus étant exécutée par une unité maître IAC (1) et le traitement des données IAC par un calculateur de traitement (2), l'unité maître IAC (1) et le calculateur de traitement (2) échangeant entre eux des données IAC et des drapeaux IAC, caractérisée en ce que
afin d'assurer la cohérence entre les données IAC et les drapeaux IAC, l'unité maître IAC (1) gèle les données IAC et les drapeaux IAC avant leur transmission au calculateur de traitement (2) à un même moment ou à différents moments, en une fonction ou en différentes fonctions.

2. Méthode selon la revendication 1, caractérisée en ce que
l'unité maître IAC (1) transmet d'abord les données IAC et ensuite les drapeaux IAC et assure ce faisant que les drapeaux IAC peuvent être mis pendant le déroulement du traitement de la fonction de transmission non pas sur "ok", mais sur "false" (erreur).

3. Méthode selon l'une des revendications 1 ou 2, caractérisée en ce que
l'unité maître IAC (1) stocke les données IAC et les drapeaux IAC à un même moment ou à différents moments dans une mémoire tampon en interne et ne modifie plus les données IAC ni les drapeaux IAC pendant la transmission desdites données IAC et desdits drapeaux IAC au calculateur de traitement (2).

4. Méthode selon l'une des revendications ci-avant, caractérisée en ce que
l'unité maître IAC (1) contrôle les drapeaux IAC d'une fonction et les met sur "ok" lorsque l'état est exempt d'erreurs, cette fonction n'étant pas traitée de façon asynchrone à la transmission des données IAC et des drapeaux IAC au calculateur de traitement (2).

5. Méthode selon l'une des revendications ci-avant, caractérisée en ce que
lorsqu'il y a reconnaissance d'erreur par l'unité maître IAC (1), un bit d'erreur supplémentaire est mis en place qui peut être mis en place uniquement par l'unité maître IAC (1) et qui peut être effacé ou validé uniquement par le calculateur de traitement (2), et en ce que les erreurs sont mises en mémoire, la mémorisation d'erreurs par le logiciel du calculateur de traitement (12) permettant d'assurer la cohérence des données IAC pendant l'échange des données entre le calculateur de traitement (2) et l'unité maître IAC (1).

6. Dispositif de commande et d'activation de capteurs (6) et/ou d'actionneurs binaires (organes asservis IAC) reliés entre eux au moyen d'un système de bus, la commande du système de bus étant exécutée par une unité maître IAC (1) et le traitement des données IAC par un calculateur de traitement (2), l'unité maître IAC (1) et le calculateur de traitement (2) échangeant entre eux des données IAC et des drapeaux IAC, caractérisé en ce que
afin d'assurer la cohérence des données IAC et des drapeaux IAC entre eux, le dispositif est en mesure de geler les données IAC et les drapeaux IAC avant que ceux-ci ne soient transmis au calculateur de traitement (2) et en ce que l'unité maître IAC (1) transmet les données IAC et les drapeaux IAC rendus de ce fait cohérents entre eux au calculateur de traitement (2) à un même moment ou à différents moments, en une fonction ou en différentes fonctions.
